# EUROPEAN PATENT SPECIFICATION

(11) **EP 1 318 629 B1**
(45) Date of publication and mention of the grant of the patent: **23.08.2006**
(21) Application number: 02258400.7
(22) Date of filing: 05.12.2002
(51) Int. Cl.: H04L 12/24

(54) **Method and system for determining autonomous system transit volumes**
Verfahren und Vorrichtung zur Festellung von Durchgangsdatenmengen für ein autonomes System
Procédé et système pour la détermination des volumes en passage d'une système autonome

(30) Priority: 07.12.2001 US 16958
(43) Date of publication of application: 11.06.2003
(73) Proprietor: Agilent Technologies, Inc., Palo Alto, CA 94306 (US)
(72) Inventor: McCollom, William Girard, Fort Collins, CO 80525 (US); Hunt, Joseph Ronald, Fort Collins, Colorado 80525 (US); Tudor, Alexander Lawrence, Mountain View, CA 94043 (US); Tatman, Lance Anthony, Fremont, CA 84536 (US); Woodcock, William E., Berkeley, CA 94709-1315 (US)
(74) Representative: Tollett, Ian

(56) References cited:
- BHATTACHARYYA S ET AL: "Pop-level and access-link-level traffic dynamics in a Tier-1 POP" PROCEEDINGS OF THE FIRST ACM SIGCOMM INTERNET MEASUREMENT WORKSHOP. UMW 2001, PROCEEDINGS OF ACM SIGCOMM INTERNET MEASUREMENT WORKSHOP 2001, SAN FRANCISCO, CA, USA, 1-2 NOV. 2001, pages 39-53, XP002260896 2001, New York, NY, USA, ACM, USA
- GAO L: "ON INFERRING AUTONOMOUS SYSTEM RELATIONSHIP IN THE INTERNET" IEEE / ACM TRANSACTIONS ON NETWORKING, IEEE INC. NEW YORK, US, vol. 9, no. 6, December 2001 (2001-12), pages 733-745, XP001087286 ISSN: 1063-6692
- NAVARRO J.P.; NICKLESS B.; WINKLER L.: 'Combining Cisco Netflow Exports with Relational Database Technology for Usage Statistics, Intrusion Detection and Network Forensics' PROCEEDINGS OF THE SYSTEMS ADMINISTRATION CONFERENCE. LISA 03 December 2000, pages 285 - 290, XP002241720
- ANONYMOUS: 'IP Routing Protocols Commands', 20 November 2000, CISCO, INTERNET article 'Retrieved from the internet: URL:http://web.archive.org/web/200011201037 00/http://cisco.com/univercd/cc/td/doc/prod uct/software/ios11/rbook/riproute.htm' Section: "show ip bgp"

## Description

The present invention relates to determining autonomous system (AS) transit and terminating volumes. More particularly, the present invention relates to calculating AS transit and terminating volumes in internet or other communication systems using routing information bases and data flow statistics for destination internet protocol addresses. Embodiments of the present invention create tables of AS transit and terminating volumes that permit network administrators to evaluate the suitability of transit providers and peers.

In a communication or a data communication system, routers maintain forwarding tables that include a prefix (i.e., an IP address and mask), a next hop IP address, and other routing parameters. The forwarding tables are generated via the border gateway protocol (BGP) and other routing protocols. Information from which routers derive the forwarding tables includes additional information about the potential path of the routed traffic, such as the destination autonomous system (AS) number (known as the terminating AS) and a list of intermediate AS numbers that the traffic traverses in order to reach the destination AS.

Internet service providers that use routers can use tools provided by router vendors to analyze data traffic routed by the routers. The data traffic analysis can be based on counters maintained by the routers. The counters can be aggregated into data flow counts, which are totals of the number of bytes of data traffic observed between two internet protocol entities. The aggregated data flow counts permit a determination to be made of how much traffic was relayed via a particular protocol between any two locations. The router usually relays these data flow counters to another system for storage and/or analysis. An example of such a system is a CISCO router that has NETFLOW capabilities that are enabled and that streams data flow information to another system. The system runs a process that stores and aggregates the data flow for later analysis. The information provided by a NETFLOW analysis merely provides data traffic volumes for a particular traffic destination. Users of the NETFLOW analysis cannot determine, for example, the intermediate networks on which the data traffic travelled. The NETFLOW users can only determine where the data traffic terminated.

Many network operators would like to be able to determine which network providers carry most of their data traffic, so that the network operators can either link directly to high traffic providers for their data traffic termination or negotiate better contracts with the high transit providers based on the observed data traffic volumes. However, existing NETFLOW-based and other similar analyses do not provide this information to a user. A method and system are needed that permit network administrators to determine on which intermediate networks data traffic has travelled in order to evaluate actual and potential peers and transit providers.

The document "Pop-Level and Access-Link-Level Traffic Dynamics in a Tier-1 POP", IMW'01, XP-002260896 discloses a system for studying traffic demands in an IP backbone. Links are tapped using optical splitters and traffic is passively monitored. BGP tables are obtained from routers and the data is then analysed.

According to an aspect of the present invention, there is provided a method according to claim 1. According to another aspect of the present invention, there is provided a system according to claim 8.

The present invention seeks to provide a system and method that permits calculation of autonomous system (AS) transit and terminating data flow volumes. The AS transit and terminating volumes permit network administrators to determine on which intermediate networks data traffic has traveled in order to evaluate actual and potential peers and transit providers. Routing information base data, including at least one prefix and at least one selected AS path, is obtained from at least one router. The routing information base includes one or more AS paths including one or more AS numbers through which data flows corresponding to a particular prefix traverse. Data flow statistics sorted by destination address are obtained from the at least one router. The routing information base data and the data flow statistics are correlated according to ASs at which the data flows terminate or traverse. Thus, ASs can be evaluated in order to determine how much data traffic traverses or terminates at the ASs.

A method of determining AS volume data includes collecting data flow statistics for at least one router and collecting routing information base data for each of the at least one router. The routing information base data and the data flow statistics are correlated, thereby yielding AS volume data.

A system for determining AS volume data includes a data flow collection node, a routing information base collection node, and a correlation node. The data flow collection node is adapted to collect data flow statistics from at least one router. The routing information base collection node is adapted to periodically collect a routing information base data from the at least one router. The correlation node is adapted to correlate the routing information base data and the data flow statistics and thereby yield AS volume data.

A method of generating autonomous system volume data includes detecting at least one first data flow having a first volume and directed toward a first destination address using a first selected autonomous path in a routing information base. For each autonomous system in the first selected autonomous system path, a counter is incremented by an amount indicating the first volume.

A method of generating autonomous system volume data includes detecting at least one first data flow having a first volume and directed toward a first destination address. For each autonomous system in a first synthetic autonomous system path, a counter is incremented by an amount indicating the first volume.

A method of generating autonomous system volume data includes detecting at least one first data flow having a first volume and directed toward a first destination address using a first selected autonomous path in a routing information base. For a terminating autonomous system in the first selected autonomous system path, a counter is incremented by an amount indicating the first volume step of analyzing.

Embodiments of the present invention permit AS transit and terminating volumes to be determined. The AS transit and terminating volumes thus determined permit network administrators to know data traffic volumes that traverse or terminate at various ASs. The AS volumes permit the network administrators to evaluate the ASs as peers or transit providers. Furthermore, the present invention provides embodiments with other features and advantages in addition to or instead of those discussed above. Many of these features and advantages are apparent from the Description below with reference to the following Drawings.

A more complete understanding of the present invention can be achieved by reference to the following Detailed Description of a number of preferred embodiments taken in conjunction with the accompanying drawings, wherein:
FIG. 1 is a block diagram that illustrates an exemplary system in accordance with principles of the present invention;
FIG. 2 is a flow diagram that illustrates exemplary operation of a correlation node N_{C} 116 in accordance with principles of the present invention; and
FIG. 3 is a flow diagram that illustrates operation of an embodiment of the present invention on a router.

In the following Detailed Description of the Exemplary Embodiments of the Invention, for purposes of explanation and not limitation, specific details are set forth in order to provide a thorough understanding of embodiments of the present invention. However, it will be apparent to those of ordinary skill in the art that embodiments of the present invention can be practiced in other embodiments that depart from these specific details. In other instances, detailed descriptions of well-known methods, devices, logical code (e.g., hardware, software, firmware), and the like are omitted so as not to obscure description of embodiments of the present invention with unnecessary detail. In particular, aspects of the BGP are referenced in order to describe aspects of embodiments of the present invention. It should be understood by those having skill in the art that the present invention can be practiced in embodiments that depart from the BGP.

A system and method in accordance with principles of the present invention correlate routing information base data from at least one router with corresponding data flow information. The correlation is performed in order to compute data traffic volumes for a plurality of autonomous system (AS) numbers. The system and method can aggregate and calculate the traffic volumes of various network transit providers and then provide information about how much network traffic transits or terminates at particular ASs. The system includes at least one computer. The at least one computer collects data flow statistics from routers that are configured to send data flow statistics to the at least one computer. The computer then aggregates the data flow statistics. In preferred embodiments of the present invention, clocks on each AS are synchronized to one another via a known time synchronization protocol, such as, for example, the network timing protocol (NTP). Use of such a known time synchronization protocol helps to ensure that measurement intervals used by preferred embodiments of the present invention correspond to one another.

The data flow statistics are correlated with routing information base data by finding which selected route in the routing information base data a given traffic flow traversed. Using an AS path listed for a selected route, a counter is incremented by the size of the data flow for each AS listed in the selected route. A set of counters, which represent data traffic that transited or terminated at each AS, results. The counters can then be combined based on network providers represented by each AS number. A report is created from the combined counters. The report describes how much data traffic transited or terminated at a particular provider's network.

Another computation can be performed by the at least one computer on a synthetic AS path. The synthetic AS path is computed by combining all possible AS paths for a particular prefix into a single path that retains the first and last AS and contains only one occurrence of each intervening AS. In other words, the synthetic AS path is a union of all AS paths for a prefix, with all duplicates removed. The effect of constructing the synthetic AS path in this manner is that the best connected AS numbers will have high transit volumes. As such, they will provide an indication to the network operator regarding the most attractive transit providers and peers.

A report can be displayed by the at least one computer that shows, for a particular time period, results of the two calculations. The report preferably indicates which of the network transit providers is already a transit provider or a peer for the network under evaluation. The report can be used to aid in the negotiation of contracts with current transit providers based on documented and projected traffic volumes. The report can also be used to choose more optimal transit providers or peers for the profile of data traffic the network operator is handling. The report can profile traffic utilization of customers of the network operator and can also perform calculations based on flows correlated with routing information bases provided by potential transit providers or peers. Reports based on routing information bases provided by potential transit providers or peers can be used by the network operator to evaluate the effect of connecting to a new or different set of transit providers or peers.

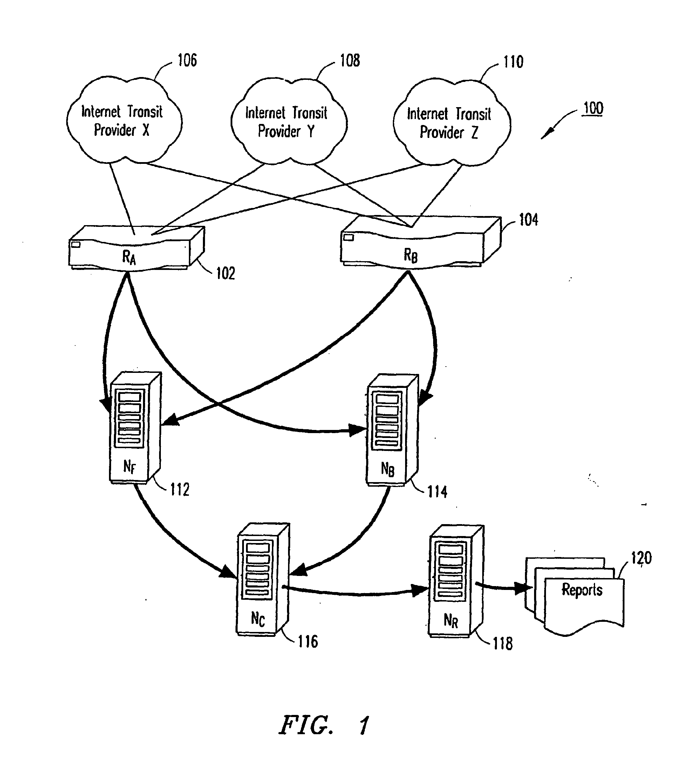

FIG. 1 shows an exemplary system 100 operating according to principles of the present invention. The system 100 includes two routers R_{A} 102 and R_{B} 104. The routers R_{A} 102 and R_{B} 104 provide access to internet transit providers X 106, Y 108, and Z 110. The system 100 also includes a data flow collection node N_{F} 112. The data flow collection node N_{F} 112 collects data flow statistics (e.g., NETFLOW data) from the router R_{A} 102 and the router R_{B} 104 during a sampling interval. The sampling interval can be variably set by an administrator. The system 100 also includes a routing information base collection node N_{B} 114. The routing information base collection node N_{B} 114 collects at periodic intervals routing information base data such as a BGP table from each of the router R_{A} 102 and the router R_{B} 104. For example, the routing information base could be collected by the routing information base collection node at the beginning of an hour-long sampling interval (i.e., a snapshot at the beginning of the interval). A correlation node N_{C} 116 correlates the data collected at the data flow collection node N_{F} 112 and the routing information base collection node N_{B} 114. The correlation node N_{C} 116 correlates the data flow statistics with corresponding routes traversed by the data flows to arrive at a determination of how much data traversed each AS represented by a selected route of each of the router R_{A} 102 and the router R_{B} 104. A reporting node N_{R} 118 analyzes and creates reports 120 on the correlated data received from the correlation node N_{C} 116.

The routing information base collection N_{B} 114, the data flow collection node N_{F} 112, the correlation node N_{C} 116, and the routing node N_{R} 118 can each be discrete nodes that are external to one another. In the alternative, one or more of the routing information base collection N_{B} 114, the data flow collection node N_{F} 112, the correlation node N_{C} 116, and the routing node N_{R} 118 can be incorporated into a single node.

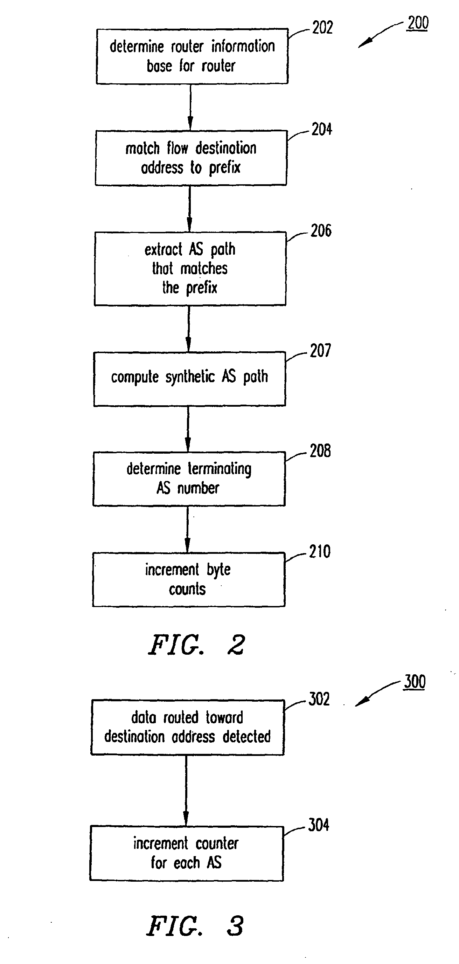

FIG. 2 is a flow chart that illustrates a flow 200 that describes how the correlation node N_{c} 116 operates. The correlation node N_{C} 116 determines an AS path set of an observed network data flow. The AS path set is the set of AS numbers appearing in a selected AS path in the routing information base corresponding to the network data flow. The correlation node N_{C} 116 preferably produces a table of AS transit volumes and a table of AS terminating volumes. The AS terminating volume is the total volume of traffic terminating at an AS for the entire routing table. An AS transit volume is the volume of data traffic that transits a given AS for a selected AS path. A selected prefix AS path is the AS path that was selected by the BGP from listed possible AS paths for the given prefix.

At step 202, the correlation node N_{C} 116 determines the routing information base (e.g., BGP table) that corresponds to both of: 1) a particular router where a data flow was observed; and 2) a sampling interval when the data flow was observed. At step 204, a data flow destination address obtained from the data flow collection node N_{F} 112 is matched to a prefix in the routing information base determined at step 202. Step 204 is preferably performed by collecting a list of all prefixes in the routing information base determined at step 202, ordering the list in ascending IP address order and descending netmask order, and determining which prefix matches a given IP address. To determine which prefix matches the given IP address, a search of the routing information base for a prefix that most closely matches the given IP address is performed.

At step 206, the selected AS path that matches the prefix is extracted from the routing information base. At step 207, a synthetic AS path is computed. A synthetic AS path is computed by: 1) forming the union of all AS numbers for every AS path for a given prefix; and 2) removing all duplicate AS numbers from the union. Embodiments of the present invention can, for example, use either synthetic AS paths, selected AS paths, or both. The synthetic AS path calculation is useful when a prefix has multiple path choices.

At step 208, the terminating AS number of the selected AS path is determined. At step 210, a byte count for each AS number in the selected AS path is incremented by the data flow volume. In a preferred embodiment, steps 204-210 are repeated for each destination address obtained from the data flow collection node N_{F} 112.

FIG. 3 is a flow diagram that illustrates the operation of an embodiment of the present invention on a router. In contrast to the embodiment shown in FIG. 1, the flow 300 is preferably performed on a router itself. The flow 300 begins at step 302, wherein data directed toward a destination address using a selected autonomous path in a routing information base of the router is detected. At step 304, a counter is incremented by an amount that indicates the volume of the data for each AS in at least one of the selected AS path and the synthetic AS path. The counter is maintained either on the router or is transmitted to another entity external to the router.

In the event that one or more ASs in the routing information base of the router is updated, routing of further data causes the updated routing information base to be used for incrementing a counter corresponding to the ASs traversed by the further data. Therefore, updates to the routing information base are automatically accounted for as needed.

When analysis and reporting are needed for a plurality of routers operating according to the flow 300, counter data resulting from the incrementing of the counters for each of the plurality of routers during a specified time period can be obtained. The counter data is then analyzed and results of the analysis are reported. For example, counter data for the specified time period could be obtained and summed for each AS and then placed in reports 120 in descending order.

Referring again to FIGS. 1 and 2, exemplary operation of the system 100 will now be described. Exemplary BGP tables for the router R_{A} 102 and the router R_{B} 104, respectively, are shown in Tables 1 and 2.

**Table 1**

| R_{A}: | Prefix | Next Hop | AS Path | Selected |
|---|---|---|---|---|
| | 9.20.0.0/16 | 157.22.9.37 | 70 24 2686 | |
| | | 4.0.71.165 | 7018 24 2686 | <<<<< |
| | | 166.63.50.121 | 3561 2555 2686 | |
| | 12.1.83.0/24 | 157.22.9.37 | 70 693 6461 14787 | |
| | | 4.0.71.165 | 7018 24 14787 | |
| | | 166.63.50.221 | 3561 24 14787 | <<<<< |

**Table 2**

| R_{B}: | Prefix | Next Hop | AS Path | Selected |
|---|---|---|---|---|
| | 9.20.0.0/16 | 157.24.9.12 | 70 24 2686 | <<<<< |
| | | 4.0.72.164 | 7418 24 2686 | |
| | | 166.63.40.111 | 3561 2555 2686 | |
| | 12.1.83.0/24 | 157.24.9.12 | 70 693 6461 14787 | |
| | | 4.0.72.164 | 7018 24 14787 | <<<<< |
| | | 166.63.40.111 | 3561 24 14787 | |

Each of Table 1 and Table 2 lists at least one prefix that is used to route data through the router R_{A} 102 and R_{B} 104, respectively. Each of the listed prefixes includes at least one next hop address and at least one AS path that are used to route data having a destination address matching the prefix. For each of the routers R_{A} 102 and R_{B} 104, one of the AS paths is a selected AS path. A selected AS path is used to route data having a destination address that matches the corresponding prefix.

The only major difference between the BGP table for the router R_{A} 102 (Table 1) and the BGP table for the router R_{B} 104 (Table 2) is which route is selected for a given prefix. Route selection is often based on policies that an administrator configures for a router and does not necessarily result in the shortest AS path. It is assumed that the BGP tables shown in Tables 1 and 2 have been acquired by routing information base collection node N_{B} 114.

Table 3 shows exemplary data flow statistics collected by the data flow collection node N_{F} 112 from the router R_{A} 102. Table 4 shows exemplary data flow statistics collected by the data flow collection node N_{F} 112 from the router R_{B} 104. Both Table 3 and Table 4 list data flow volume by destination IP address.

**Table 3 (R_{A})**

| Destination | Size |
|---|---|
| 9.20.0.1 | 200 MB |
| 9.20.230.6 | 300 MB |
| 9.20.130.37 | 600 MB |
| 12.1.83.7 | 400 MB |
| 12.1.83.26 | 500 MB |

**Table 4 (R_{B})**

| Destination | Size |
|---|---|
| 9.20.16.21 | 600 MB |
| 9.20.66.36 | 600 MB |
| 9.20.30.124 | 100MB |
| 12.1.83.3 | 400 MB |
| 12.1.83.21 | 300 MB |
| 12.1.83.72 | 200 MB |

The data flow collection node N_{F} 112 has aggregated, per destination address, the data flow statistics it has collected during a sampling interval for each of the routers R_{A} 102 and R_{B} 104. A program known as cflowd, which is a generally available software program, or any other data flow collection program, can be used to aggregate the data flow statistics from each of the routers R_{A} 102 and R_{B} 104 by destination address.

The correlation node N_{C} 116 retrieves both the aggregated data flow statistics from the data flow collection node N_{F} 112 and the BGP tables for each of the routers R_{A} 102 and R_{B} 104 from the routing information base collection node N_{B} 114. The correlation node N_{C} 116 then performs a correlation of the BGP tables and the aggregated data flow statistics to yield data flow statistics. The data flow statistics are correlated for each AS in the selected AS paths listed in the BGP tables collected by the routing information base collection node N_{B} 114.

The correlation node N_{C} 116 performs the correlation by determining the BGP table associated with the router R_{A} 102 as described in step 202. The determined BGP table for the router R_{A} 102 is shown in Table 1. Steps 204, 206, 208, and 210 are then performed as follows using the BGP table of the router R_{A} 102 and the data flow statistics found in Table 3:

| | | |
|---|---|---|
| **9.20.0.1** | **200 MB** | **AS PATH 7018 24 2686** |

The data flow to 9.20.0.1 took the selected route from AS 7018 to AS 24 to AS 2686. Since the data flow to 9.20.0.1 was 200 MB, C(7018) = 200MB, C(24) = 200MB, and C(2686) = 200MB.

| | | |
|---|---|---|
| **9.20.230.6** | **300 MB** | **AS PATH 7018 24 2686** |

The data flow to 9.20.230.6 took the selected route from AS 7018 to AS 24 to AS 2686, so C(7018) = C(7018) + 300MB = 500MB, C(24) = C(24) + 300MB = 500MB, and C(2686) = C(2686) + 300MB = 500 MB.

| | | |
|---|---|---|
| **9.20.130.37** | **600 MB** | **AS PATH 7018 24 2686** |

The data flow to 9.20.130.37 took the selected route from AS 7018 to AS 24 to AS 2686, so C(7018) = C(7018) + 600MB = 1100MB, C(24) = C(24) + 600MB = 1100MB, and C(2686) = C(2686) + 600MB = 1100MB.

| | | |
|---|---|---|
| **12.1.83.7** | **400 MB** | **AS PATH 3561 24 14787** |

The data flow to 12.1.83.7 took the selected route from AS 3561 to AS 14787, so C(3561) = 400MB, C(24) = C(24) + 400MB = 1500MB, and C(14787) = 400MB.

| | | |
|---|---|---|
| **12.1.83.26** | **500 MB** | **AS PATH 3561 24 14787** |

The data flow to 12.1.83.26 took the selected route from AS 3561 to AS 14787, so C(3561) = C(3561) + 500MB = 900MB, C(24) = C(24) + 500MB = 2000MB, and C(14787) = C(14787) + 500MB = 900MB.

At the conclusion of the correlation of the data flow statistics of Table 3 and the BGP table of the router R_{A} 102 (Table 1), the AS counters are as follows:
C(70) = 0 MB
C(24) = 2000 MB
C(7018) = 1100 MB
C(2686)= 1100 MB
C(3561) = 900 MB
C(2555) = 0 MB
C(693) = 0 MB
C(6461) = 0 MB
C(14787) = 900 MB

The correlation node N_{C} 116 continues performing the correlation by determining the BGP table associated with the router R_{B} 104 as described in step 202. The determined BGP table for the router R_{B} 104 is shown in Table 2. Steps 204, 206, 208, and 210 are then performed as follows using the BGP table of the router R_{B} 104 and the data flow statistics found in Table 4:

| | | |
|---|---|---|
| **9.20.16.21** | **600 MB** | **AS PATH 70 24 2686** |

The data flow to 9.20.16.21 took the selected route from AS 70 to AS 24 to AS 2686. Since the data flow was 600 MB, C(70) = 600MB, C(24) = C(24) + 600MB = 2600MB, and C(2686) = C(2686) + 600MB = 1700MB.

| | | |
|---|---|---|
| **9.20.66.36** | **600 MB** | **AS PATH 70 24 2686** |

The data flow to 9.20.66.36 took the selected route from AS 70 to AS 24 to AS 2686, so C(70) = C(70) + 600MB = 1200MB, C(24) = C(24) + 600MB = 3200MB, and C(2686) = C(2686) + 600MB = 2300MB.

| | | |
|---|---|---|
| **9.20.30.124** | **100 MB** | **AS PATH 70 24 2686** |

The data flow to 9.20.130.124 took the selected route from AS 70 to AS 24 to AS 2686, so C(70) = C(70) + 100MB = 1300MB, C(24) = C(24) + 100MB = 3300MB, and C(2686) = C(2686) + 100MB = 2400MB.

| | | |
|---|---|---|
| **12.1.83.3** | **400 MB** | **AS PATH 7018 24 14787** |

The data flow to 12.1.83.3 took the selected route from AS 7018 to AS 24 to AS 14787, so C(7018) = C(7018) + 400MB = 1500MB, C(24) = C(24) + 400MB = 3700MB, and C(14787) = C(14787) + 400MB = 1300MB.

| | | |
|---|---|---|
| **12.1.83.21** | **300 MB** | **AS PATH 7018 24 14787** |

The data flow to 12.1.83.21 took the selected route from AS 7018 to AS 24 to AS 14787, so C(7018) = C(7018) + 300MB = 1800MB, C(24) = C(24) + 300MB = 4000MB, and C(14787) = C(14787) + 300MB = 1600MB.

| | | |
|---|---|---|
| **12.1.83.72** | **200 MB** | **AS PATH 7018 24 14787** |

The data flow to 12.1.83.72 took the selected route from 7018 to AS 24 to AS 14787, so C(7018) = C(7018) + 200MB = 2000MB, C(24) = C(24) + 200MB = 4200MB, and C(14787) = C(14787) + 200MB = 1800MB.

At the conclusion of the correlation for both the router R_{A} 102 and the router R_{B} 104, the AS data flow statistics are as follows:
C(70) = 1300MB
C(24) = 4200MB
C(7018) = 2000MB
C(2686) = 2400MB
C(3561) = 900MB
C(2555) = 0MB
C(693) = 0MB
C(6461)=0MB
C(14787) = 1800MB

Referring again to FIG. 1, the overall AS data flow statistics are forwarded to the reporting node N_{R} 118. The overall AS data flow statistics can be made to indicate which AS numbers represent existing peers. For example, AS 70, AS 7018, and AS 3561 could be indicated as being existing peers.

The reporting node N_{R} 118 can prioritize the list of AS numbers according to their overall data flow statistics as aggregated by the correlation node N_{C} 116 and indicate those AS numbers that are existing peers. The reporting node N_{R} 118 can display, for example, the top 5 AS transit volumes as shown in Table 5, wherein a * indicates an AS number that is a current transit provider or peer.

**Table 5**

| AS Number | Transit Volume |
|---|---|
| 24 | 4200MB |
| 2686 | 2400MB |
| *7018 | 2000MB |
| 14787 | 1800MB |
| *70 | 1300MB |

Table 5 shows that AS 24 would make an excellent peer because much traffic volume is routed through AS 24. There is much traffic traversing AS 2686. Therefore, AS 2686 would also make a good peer.

In another embodiment of the present invention, volume calculations are performed using synthetic AS paths as shown in step 207 of FIG. 2 in addition to or instead of the selected-route AS paths as described above. A synthetic AS path is computed by: 1) forming the union of all AS numbers for every AS path for a given prefix; and 2) removing all duplicate AS numbers from the union.

If the same routing tables listed in Tables 1 and 2 and the same data flow statistics listed in Tables 3 and 4 are used, Table 6 results. Table 6 includes each prefix and its associated synthetic AS path.

**Table 6**

| Prefix | Synthetic AS Path |
|---|---|
| 9.20.0.0/16 | 70 24 7018 3561 2555 2686 |
| 12.1.83.0/24 | 70 693 6461 7018 24 3561 14787 |

Each entry from Table 3 and 4 is processed as described above except that, for each router, a synthetic AS path, as opposed to a selected AS path, is used. Each AS counter is incremented by the flow sizes that match each prefix. The resulting volume calculations after processing each entry are as follows:
C(70) = 4200
C(24) = 4200
C(7018) = 4200
C(3561) = 4200
C(2555) = 2400
C(2686) = 2400
C(693) = 900
C(6461) = 900
C(14787) = 900

The reporting node NR can report the top 5 synthetic transit volumes as shown in Table 7, in which * indicates an AS number that is a current peer or transit provider:

**Table 7**

| AS Number | Synthetic Transit Volume |
|---|---|
| *70 | 4200 |
| 24 | 4200 |
| *7018 | 4200 |
| *3561 | 4200 |
| 2555 | 2400 |

From this analysis, it is apparent that AS number 24 is a good potential transit provider.

The above illustrates how an exemplary system in accordance with principles of the present invention can operate. Although it would be easy to see from the BGP routing tables and data flow statistics that AS 24 would be a good peering candidate, real-world data sets are typically much more complicated and much more difficult to analyze. Embodiments of the present invention process data and yield reports 120 that permit a simplified view of what AS numbers are most active and, thus, which AS numbers would be best to peer with for routing transit traffic.

As will be recognized by those having skill in the art, the innovative concepts described in the present patent application can be modified and varied over a wide range of applications. Accordingly, the scope of patented subject matter should not be limited to any of the specific exemplary teachings discussed, but is instead defined by the following claims.

## Claims

1. A method of determining autonomous system volume data including the steps of:
collecting, from at least one router, data flow statistics for each of the at least one router;
collecting routing information base data for each of the at least one router; and
correlating the routing information base data and the data flow statistics, thereby yielding autonomous system volume data,
**characterised by** that correlation is performed by: detecting from said data flow statistics at least one first data flow having a first volume and directed toward a first destination address;
generating a first synthetic autonomous system path by combining all possible autonomous system paths for a respective prefix matching the first destination address into a single path retaining the first and last autonomous systems and only one occurrence of each intervening autonomous system; and,
for each autonomous system in the first synthetic autonomous system path, incrementing a counter by an amount indicating the first volume.

2. A method as claimed in claim 1, further comprising, following the step of correlating:
analyzing the autonomous system volume data; and
reporting results of the step of analyzing.

3. A method as claimed in claim 1 or 2, further comprising:
detecting from said data flow statistics and said routing base data at least one first data flow having a first volume and directed toward a first destination address using a first selected autonomous system path in a routing information base; and
for each autonomous system in the first selected autonomous system path, incrementing a counter by an amount indicating the first volume.

4. A method as claimed in claim 3, further comprising:
detecting from said data flow statistics and said routing base data at least one second data flow having a second volume and directed toward a second destination address using a second selected autonomous system path in the routing information base;
for each autonomous system in the second selected autonomous system path, incrementing a counter by an amount indicating the second volume; and
wherein at least one autonomous system in the routing information base is updated before the detecting of the at least one second data flow.

5. A method as claimed in claim 1, further comprising:
detecting from said data flow statistics at least one second data flow having a second volume and directed toward a second destination address;
generating a second synthetic autonomous system path by combining all possible autonomous system paths for a respective prefix into a single path retaining the first and last autonomous systems and only one occurrence of each intervening autonomous system;
for each autonomous system in the second synthetic autonomous system path, incrementing a counter by an amount indicating the second volume; and
wherein at least one autonomous system in a routing information base is updated before the detecting of the at least one second data flow.

6. A method as claimed in claim 1 or 2, further comprising:
detecting from said data flow statistics and said routing base data at least one first data flow having a first volume and directed toward a first destination address using a first selected autonomous system path in a routing information base; and
for a terminating autonomous system in the first selected autonomous system path, incrementing a counter by an amount indicating the first volume.

7. A method as claimed in claim 6, further comprising:
detecting at least one second data flow having a second volume and directed toward a second destination address using a second selected autonomous system path in the routing information base;
for a terminating autonomous system in the second selected autonomous system path, incrementing a counter by an amount indicating the second volume; and
wherein at least one autonomous system in the routing information base is updated before the detecting of the at least one second data flow.

8. A system for determining autonomous system volume data including:
a data flow collection node (112) adapted to collect data flow statistics from at least one router;
a routing information base collection node (114) adapted to periodically collect routing information base data from the at least one router; **characterised by**:
a correlation node (116) adapted to correlate the routing information base data and the data flow statistics and thereby yield autonomous system volume data by: detecting from said data flow statistics at least one first data flow having a first volume and directed toward a first destination address, generating a first synthetic autonomous system path by combining all possible autonomous system paths for a respective prefix matching the first destination address into a single path retaining the first and last autonomous systems and only one occurrence of each intervening autonomous system, and for each autonomous system in the first synthetic autonomous system path incrementing a counter by an amount indicating the first volume.

9. A system as claimed in claim 8, further comprising a reporting node (118) adapted to analyze and report on the autonomous system volume data.

## Patentansprüche

1. Ein Verfahren zum Bestimmen von Autonomes-System-Volumendaten, das folgende Schritte umfasst:
Sammeln, von zumindest einem Router, von Datenflussstatistiken für jeden des zumindest einen Routers;
von Routinginformationsbasisdaten für jeden des zumindest einen Routers; und
Korrelieren der Routinginformationsbasisdaten und der Datenflussstatistiken, wodurch sich Autonomes-System-Volumendaten ergeben,
**dadurch gekennzeichnet, dass** die Korrelation anhand folgender Schritte durchgeführt wird: Erfassen, aus den Datenflussstatistiken, zumindest eines ersten Datenflusses, der ein erstes Volumen aufweist und auf eine erste Zieladresse gerichtet ist;
Erzeugen eines ersten synthetischen Autonomes-System-Pfades durch Kombinieren aller möglichen Autonomes-System-Pfade für einen jeweiligen Präfix, der zu der ersten Zieladresse passt, zu einem einzigen Pfad, der das erste und das letzte autonome System und lediglich einen Auftretensfall jedes dazwischenliegenden autonomen Systems hält; und
für jedes autonome System in dem ersten synthetischen Autonomes-System-Pfad, Inkrementieren eines Zählers um einen Betrag, der das erste Volumen angibt.

2. Ein Verfahren gemäß Anspruch 1, das im Anschluss an den Schritt des Korrelierens ferner folgende Schritte umfasst:
Analysieren der Autonomes-System-Volumendaten; und
Berichten von Ergebnissen des Analyseschrittes.

3. Ein Verfahren gemäß Anspruch 1 oder 2, das ferner folgende Schritte umfasst:
Erfassen, aus den Datenflussstatistiken und den Routingbasisdaten, zumindest eines ersten Datenflusses, der ein erstes Volumen aufweist und auf eine erste Zieladresse gerichtet ist, unter Verwendung eines ersten ausgewählten Autonomes-System-Pfades in einer Routing-informationsbasis; und
für jedes autonome System in dem ersten ausgewählten Autonomes-System-Pfad, Inkrementieren eines Zählers um einen Betrag, der das erste Volumen angibt.

4. Ein Verfahren gemäß Anspruch 3, das ferner folgende Schritte umfasst:
Erfassen, aus den Datenflussstatistiken und den Routingbasisdaten, zumindest eines zweiten Datenflusses, der ein zweites Volumen aufweist und auf eine zweite Zieladresse gerichtet ist, unter Verwendung eines zweiten ausgewählten Autonomes-System-Pfades in der Routing-informationsbasis;
für jedes autonome System in dem zweiten ausgewählten Autonomes-System-Pfad, Inkrementieren eines Zählers um einen Betrag, der das zweite Volumen angibt; und
wobei zumindest ein autonomes System in der Routinginformationsbasis vor dem Erfassen des zumindest einen zweiten Datenflusses aktualisiert wird.

5. Ein Verfahren gemäß Anspruch 1, das ferner folgende Schritte umfasst:
Erfassen, aus den Datenflussstatistiken, zumindest eines zweiten Datenflusses, der ein zweites Volumen aufweist und auf eine zweite Zieladresse gerichtet ist;
Erzeugen eines zweiten synthetischen Autonomes-System-Pfads durch Kombinieren aller möglichen Autonomes-System-Pfade für einen jeweiligen Präfix zu einem einzigen Pfad, der das erste und das letzte autonome System und lediglich einen Auftretensfall jedes dazwischenliegenden autonomen Systems hält;
für jedes autonome System in dem zweiten synthetischen Autonomes-System-Pfad, Inkrementieren eines Zählers um einen Betrag, der das zweite Volumen angibt; und
wobei zumindest ein autonomes System in einer Routing-informationsbasis vor dem Erfassen des zumindest einen zweiten Datenflusses aktualisiert wird.

6. Ein Verfahren gemäß Anspruch 1 oder 2, das ferner folgende Schritte umfasst:
Erfassen, aus den Datenflussstatistiken und den Routingbasisdaten, zumindest eines ersten Datenflusses, der ein erstes Volumen aufweist und auf eine erste Zieladresse gerichtet ist, unter Verwendung eines ersten ausgewählten Autonomes-System-Pfades in einer Routing-informationsbasis; und
für ein abschließendes autonomes System in dem ersten ausgewählten Autonomes-System-Pfad, Inkrementieren eines Zählers um einen Betrag, der das erste Volumen angibt.

7. Ein Verfahren gemäß Anspruch 6, das ferner folgende Schritte umfasst:
Erfassen zumindest eines zweiten Datenflusses, der ein zweites Volumen aufweist und auf eine zweite Zieladresse gerichtet ist, unter Verwendung eines zweiten ausgewählten Autonomes-System-Pfades in der Routing-informationsbasis;
für ein abschließendes autonomes System in dem zweiten ausgewählten Autonomes-System-Pfad, Inkrementieren eines Zählers um einen Betrag, der das zweite Volumen angibt; und
wobei zumindest ein autonomes System in der Routinginformationsbasis vor dem Erfassen des zumindest einen zweiten Datenflusses aktualisiert wird.

8. Ein System zum Ermitteln von Autonomes-System-Volumendaten, das folgende Merkmale aufweist:
einen Datenfluss-Sammelknoten (112), der dahin gehend angepasst ist, Datenflussstatistiken von zumindest einem Router zu sammeln;
einen Routinginformationsbasis-Sammelknoten (114), der dahin gehend angepasst ist, Routinginformationsbasisdaten von dem zumindest einen Router periodisch zu sammeln;
**gekennzeichnet durch**:
einen Korrelationsknoten (116), der dahin gehend angepasst ist, die Routinginformationsbasisdaten und die Datenflussstatistiken zu korrelieren und **dadurch** anhand folgender Schritte Autonomes-System-Volumendaten zu liefern: Erfassen, aus den Datenflussstatistiken, zumindest eines ersten Datenflusses, der ein erstes Volumen aufweist und auf eine erste Zieladresse gerichtet ist, Erzeugen eines ersten synthetischen Autonomes-System-Pfades **durch** Kombinieren aller möglichen Autonomes-System-Pfade für einen jeweiligen Präfix, der zu der ersten Zieladresse passt, zu einem einzigen Pfad, der das erste und das letzte autonome System und lediglich einen Auftretensfall jedes dazwischenliegenden autonomen Systems hält, und, für jedes autonome System in dem ersten synthetischen Autonomes-System-Pfad, Inkrementieren eines Zählers um einen Betrag, der das erste Volumen angibt.

9. Ein System gemäß Anspruch 8, das ferner einen Berichtknoten (118) aufweist, der dahin gehend angepasst ist, die Autonomes-System-Volumendaten zu analysieren und über dieselben zu berichten.

## Revendications

1. Procédé de détermination de données de volume de système autonome comprenant les étapes consistant à :
recueillir, à partir d'au moins un routeur, des statistiques de flux de données du routeur au moins;
recueillir des données de base d'informations de routage de du routeur au moins; et
corréler les données de base d'informations de routage avec les statistiques de flux de données, en produisant de ce fait des données de volume de système autonome,
**caractérisé par le fait que** la corrélation est exécutée par :
la détection à partir desdites statistiques de flux de données, d'un premier flux de données au moins ayant un premier volume et dirigé vers une première adresse de destination ;
la génération d'un premier chemin synthétique de système autonome en combinant tous les chemins possibles de système autonome pour un préfixe respectif correspondant à la première adresse de destination, en un seul chemin, en retenant le premier et le dernier systèmes autonomes et seulement une occurrence de chaque système autonome intermédiaire ; et,
pour chaque système autonome présent dans le premier chemin synthétique de système autonome,
l'incrémentation d'un compteur d'une quantité indiquant le premier volume.

2. Procédé selon la revendication 1, comprenant de plus, après l'étape de corrélation :
l'analyse des données de volume de système autonome ; et
l'établissement d'un rapport des résultats de l'étape d'analyse.

3. Procédé selon l'une quelconque des revendications 1 ou 2, comprenant de plus :
la détection à partir desdites statistiques de flux de données et desdites données de base de routage, d'au moins un premier flux de données présentant un premier volume et dirigé vers une première adresse de destination en utilisant un premier chemin sélectionné de système autonome dans une base d'informations de routage ; et
pour chaque système autonome présent dans le premier chemin sélectionné de système autonome,
l'incrémentation d'un compteur d'une quantité indiquant le premier volume.

4. Procédé selon la revendication 3, comprenant de plus :
la détection à partir desdites statistiques de flux de données et desdites données de base de routage, d'au moins un deuxième flux de données présentant un deuxième volume et dirigé vers une deuxième adresse de destination en utilisant un deuxième chemin de système autonome sélectionné dans la base d'informations de routage ;
pour chaque système autonome présent dans le deuxième chemin sélectionné de système autonome,
l'incrémentation d'un compteur d'une quantité indiquant le deuxième volume ; et
dans lequel au moins un système autonome dans la base d'informations de routage, est mis à jour avant la détection dudit deuxième flux de données.

5. Procédé selon la revendication 1, comprenant de plus :
la détection à partir desdites statistiques de flux de données, d'un deuxième flux de données au moins ayant un deuxième volume et dirigé vers une deuxième adresse de destination ;
la génération d'un deuxième chemin synthétique de système autonome en combinant tous les chemins possibles de système autonome pour un préfixe respectif en un seul chemin retenant le premier et le dernier systèmes autonomes et seulement une occurrence de chaque système autonome intermédiaire ;
pour chaque système autonome présent dans le deuxième chemin synthétique de système autonome,
l'incrémentation d'un compteur d'une quantité indiquant le deuxième volume ; et
dans lequel au moins un système autonome dans une base d'informations de routage, est mis à jour avant la détection dudit deuxième flux de données.

6. Procédé selon l'une quelconque des revendications 1 ou 2, comprenant de plus :
la détection à partir desdites statistiques de flux de données et desdites données de base de routage, d'au moins un premier flux de données présentant un premier volume et dirigé vers une première adresse de destination en utilisant un premier chemin sélectionné de système autonome dans une base d'informations de routage ; et
pour un système autonome de terminaison présent dans le premier chemin sélectionné de système autonome,
l'incrémentation d'un compteur d'une quantité indiquant le premier volume.

7. Procédé selon la revendication 6, comprenant de plus :
la détection d'au moins un deuxième flux de données présentant un deuxième volume et dirigé vers une deuxième adresse de destination en utilisant un deuxième chemin sélectionné de système autonome dans la base d'informations de routage ;
pour un système autonome de terminaison présent dans le deuxième chemin sélectionné de système autonome,
l'incrémentation d'un compteur d'une quantité indiquant le deuxième volume ; et
dans lequel au moins un système autonome dans la base d'informations de routage, est mis à jour avant la détection dudit un deuxième flux de données.

8. Système de détermination de données de volume de système autonome comprenant :
un noeud de recueil de flux de données (112) adapté pour recueillir des statistiques de flux de données à partir d'au moins un routeur ;
un noeud de recueil de base d'informations de routage (114) adapté pour recueillir périodiquement des données de base d'informations de routage à partir de l'au moins un routeur ; **caractérisé par** :
un noeud de corrélation (116) adapté pour corréler les données de base d'informations de routage et les statistiques de flux de données, et produire de ce fait des données de volume de système autonome en : détectant à partir desdites statistiques de flux de données au moins un premier flux de données ayant un premier volume et dirigé vers une première adresse de destination, générant une premier chemin synthétique de système autonome en combinant tous les chemins possibles de système autonome pour un préfixe respectif correspondant à la première adresse de destination en un seul chemin en retenant les premier et dernier systèmes autonomes et seulement une occurrence de chaque système autonome intermédiaire, et pour chaque système autonome présent dans le premier chemin synthétique de système autonome, en incrémentant un compteur d'une quantité indiquant le premier volume.

9. Système selon la revendication 8, comprenant de plus un noeud de rapport (118) adapté pour analyser, et établir un rapport sur, les données de volume de système autonome.
